# EUROPEAN PATENT SPECIFICATION

(11) **EP 3 457 288 B1**
(45) Date of publication and mention of the grant of the patent: **17.11.2021**
(21) Application number: 17854531.5
(22) Date of filing: 13.07.2017
(51) Int. Cl.: G06F 9/455, H04L 12/46, G06F 3/06, G06F 12/08, G06F 9/50

(54) **COMPUTER SYSTEM AND STORAGE ACCESS DEVICE**
COMPUTERSYSTEM UND SPEICHERZUGANGSVORRICHTUNG
SYSTÈME INFORMATIQUE ET DISPOSITIF D'ACCÈS À LA MÉMOIRE

(30) Priority: 30.09.2016 CN 201610878406
(43) Date of publication of application: 20.03.2019
(73) Proprietor: Huawei Technologies Co., Ltd., Longgang District Shenzhen, Guangdong 518129 (CN)
(72) Inventor: JIA, Xiaolin, Shenzhen Guangdong 518129 (CN); LIN, Muhui, Shenzhen Guangdong 518129 (CN)
(74) Representative: Körber, Martin Hans
(86) International application number: PCT/CN2017/092816
(87) International publication number: WO 2018/059077

(56) References cited:
- CN-A- 102 255 962
- CN-A- 104 461 958
- CN-A- 105 808 167
- US-A1- 2011 179 414
- US-A1- 2011 179 414
- US-A1- 2012 102 491

## Description

### TECHNICAL FIELD

The present application relates to storage technologies, and in particular, to a computer system and a storage access apparatus.

### BACKGROUND

Virtualization technologies are applied to an increasingly wide scope, and a demand for improving resource utilization through network and storage virtualization and improving performance of network and storage access by a virtual machine is increasingly strong.

In an existing virtualization technology, virtual storage resource management is implemented by using a virtualization layer (such as Hypervisor) or a virtual machine manager (Virtual Machine Manager, VMM). The virtualization layer or the virtual machine manager encapsulates attached storage resources into virtual hard disks, and allocates the virtual hard disks to different VMs for use. A path by which a virtual machine (Virtual Machine, VM) accesses an allocated storage resource is relatively complex. The virtual machine needs to be connected to a back-end access interface (the back-end access interface is usually in kennel mode) at the virtualization layer or the virtual machine manager by using a front-end access interface deployed on the virtual machine, then a storage access request is forwarded by the back-end access interface to a storage resource scheduling module deployed at the virtualization layer or the virtual machine manager for physical storage resource scheduling or positioning (the storage resource scheduling module is usually in user mode), and finally the storage access request can be forwarded to a physical storage resource.

In the foregoing storage resource access manner, the access path is complex and long, and a latency is large; and the access request has to pass the front-end access interface of the virtual machine, and the back-end access interface and the storage resource scheduling module of the virtualization layer or the virtual machine manager. These all need to occupy CPU resources of a host, affecting CPU resource occupation of the host.

US 2011/179414 A1 discloses a host machine hosting a virtual machine and configured to implement a virtualization intermediary.

US 2012/102491 A1 discloses a method for virtual function boot in a system including a single-root I/O virtualization (SR-IOV) enabled server.

### SUMMARY

Embodiments of the present application provide a computer system and a storage access apparatus, so as to implement direct access of a virtual machine to a storage resource, shorten a storage access path and latency, and reduce occupation of CPU resources in a compute node. The present invention is defined by the computing system of independent claim 1 and by the storage access apparatus of independent claim 6, and by the method of storage accessing of independent claim 9. Additional features of the invention are presented in the dependent claims. In the following, parts of the description and drawing referring to embodiments, which are not covered by the claims, are not presented as embodiments of the invention, but as examples useful for understanding the invention.

According to a first aspect, an embodiment of the present application provides a computer system, and the computer system includes n compute nodes, n storage access apparatuses, and m network storage devices, where at least one virtual machine VM runs on each compute node, the m network storage devices provide distributed storage resources for the at least one virtual machine, each compute node includes a processor, a memory, and a storage access apparatus, and n and m are integers greater than or equal to 1.

Each storage access apparatus includes a hardware-form processing unit, a Peripheral Component Interconnect Express PCIe bus interface, and a network interface, one end of the storage access apparatus is connected to a processor of the at least one compute node by using the PCIe interface, and another end of the storage access apparatus is connected to the at least one network storage device by using the network interface.

The storage access apparatus in this application supports single-root I/O virtualization SR-IOV and is configured to: configure at least one virtual function VF by using a physical function PF of the SR-IOV function, and configure a VM-VF association relationship, so that a direct access path is established between a VM and a VF that are associated, where one VM corresponds to one VF; and the storage access apparatus further supports a distributed storage resource scheduling function and is configured to: obtain, by using the network interface, data block resources provided by the at least one network storage device that is connected to the storage access apparatus, form a plurality of virtual volumes by using the obtained data block resources, and configure a VF-virtual volume association relationship, where one VF corresponds to at least one virtual volume.

The storage access apparatus provided in this application can directly establish a direct access path between a storage resource and a virtual machine. Therefore, a storage access method supported by the storage access apparatus does not require front-end and back-end software stacks that are used by a VM to access a storage resource in an existing cloud computing virtualization technology, so that a software stack path and a latency are shortened and performance is enhanced. In addition, the method does not require a large quantity of host (a CPU in a compute node) resources, so that host resource utilization is improved.

Optionally, a PF back-end driver is deployed in the storage access apparatus provided in this application, and a PF front-end driver is deployed in the compute node connected to the storage access apparatus; after being started, the storage access apparatus loads the PF back-end driver to perform initialization; and the compute node connected to the storage access apparatus loads the PF front-end driver, obtains resource information of the storage access apparatus by using the PF front-end driver, and delivers a configuration command to the storage access apparatus based on the resource information of the storage access apparatus, so that the storage access apparatus performs resource configuration, to allocate corresponding hardware resources to the PF and each VF.

Optionally, the storage access apparatus provided in this application specifically executes a VM-VF association operation as follows: after receiving a first VM association command sent by an upper-layer application, the compute node connected to the storage access apparatus forwards the first VM association command to the PF back-end driver module by using the PF front-end driver module; and after receiving the first VM association command by using the PF back-end driver module, the storage access apparatus configures a corresponding first VF for a first VM designated in the first VM association command, and records an association relationship between the first VM and the first VF.

The storage access apparatus provided in this application specifically executes a VF-virtual volume association operation as follows: the storage access apparatus (the storage access apparatus may provide a management interface, such as an interface that provides a command-line interface CLI or a web user interface web UI for a management layer) receives an allocation request for allocating a storage resource to the first VM, determines the first VF associated with the first VM, allocates at least one of the plurality of virtual volumes to the first VM, creates an association relationship between the allocated at least one virtual volume and the first VF, and returns an allocation response, where the allocation response includes information about the at least one virtual volume that is allocated to the first VM.

Optionally, the storage access apparatus provided in this application specifically executes a VM read or write request as follows: the first VF of the storage access apparatus receives an I/O request of the first VM by using the direct access path, places the I/O request into an I/O queue of the first VF, determines, based on the virtual volume associated with the first VF, a data block that is in the network storage device and that corresponds to the I/O request, and executes a read or write operation on the data block that is in the network storage device and that corresponds to the I/O request.

According to a second aspect, this application further provides a storage access apparatus. The storage access apparatus includes a hardware-form processing unit, a Peripheral Component Interconnect Express PCIe bus interface, and a network interface, one end of the storage access apparatus is connected to a processor of a compute node by using the PCIe interface, and another end of the storage access apparatus is connected to at least one network storage device by using the network interface.

At least one virtual machine VM runs on the compute node, and the at least one network storage device provides distributed storage resources for the at least one virtual machine.

The storage access apparatus provided in this application includes a direct access module, where the direct access module supports single-root I/O virtualization SR-IOV and is configured to: perform virtualization to obtain at least one virtual function VF by using a physical function PF of the SR-IOV function, and configure a VM-VF association relationship, so that a direct access path is established between a VM and a VF that are associated, where one VM corresponds to one VF; and the storage access apparatus further includes a resource scheduler, where the resource scheduler supports a distributed storage resource scheduling function and is configured to: obtain, by using the network interface, data block resources provided by the at least one network storage device that is connected to the storage access apparatus, form a plurality of virtual volumes by using the obtained data block resources, and configure a VF-virtual volume association relationship, where one VF corresponds to at least one virtual volume.

According to a third aspect, this application further provides a storage access apparatus, and the storage access apparatus includes a hardware-form processing unit, a first interface (such as a Peripheral Component Interconnect Express PCIe bus interface), and a second interface (such as a network interface).

The hardware-form processing unit in the storage access apparatus provided in this application is configured to: support an SR-IOV function and a distributed storage resource scheduling function; perform virtualization to obtain at least one virtual function VF by using a physical function PF of the SR-IOV function, and configure a VM-VF association relationship, so that a direct access path is established between a VM and a VF that are associated, where one VM corresponds to one VF; and obtain, by using the network interface, data block resources provided by the at least one network storage device that is connected to the storage access apparatus, form a plurality of virtual volumes by using the obtained data block resources, and configure a VF-virtual volume association relationship, where one VF corresponds to at least one virtual volume. The hardware-form processing unit in the storage access apparatus provided in this application is configured to perform the following specific storage access method in this application: After a first VM sends an I/O request, a first VF of the storage access apparatus receives the I/O request of the first VM by using the direct access path, and places the I/O request into an I/O queue of the first VF; and the processing unit then determines, based on a virtual volume associated with the first VF, a data block that is in the network storage device and that corresponds to the I/O request, and executes a read or write operation on the data block that is in the network storage device and that corresponds to the I/O request.

In this application, the storage access method implemented by the storage access apparatus no longer requires passing a front-end interface and a back-end interface that are at a virtualization medium layer, so that a VM access path, a software stack path, and an access latency are shortened, and storage access performance is enhanced. In addition, the method does not require a large quantity of host (a CPU in a compute node) resources, so that host resource utilization is improved.

### BRIEF DESCRIPTION OF DRAWINGS

To describe the technical solutions in the embodiments of the present application more clearly, the following briefly describes the accompanying drawings required for describing the embodiments. Apparently, the accompanying drawings in the following description show merely some embodiments of the present application, and a person of ordinary skill in the art may derive other drawings from these accompanying drawings without creative efforts.
FIG. 1 is a schematic architectural diagram of a computer system according to this application;
FIG. 2 is a schematic diagram of composition details of a computer system according to this application; and
FIG. 3 is a schematic structural diagram of a storage access apparatus according to this application.

### DESCRIPTION OF EMBODIMENTS

The following clearly describes the technical solutions in the embodiments of the present application with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

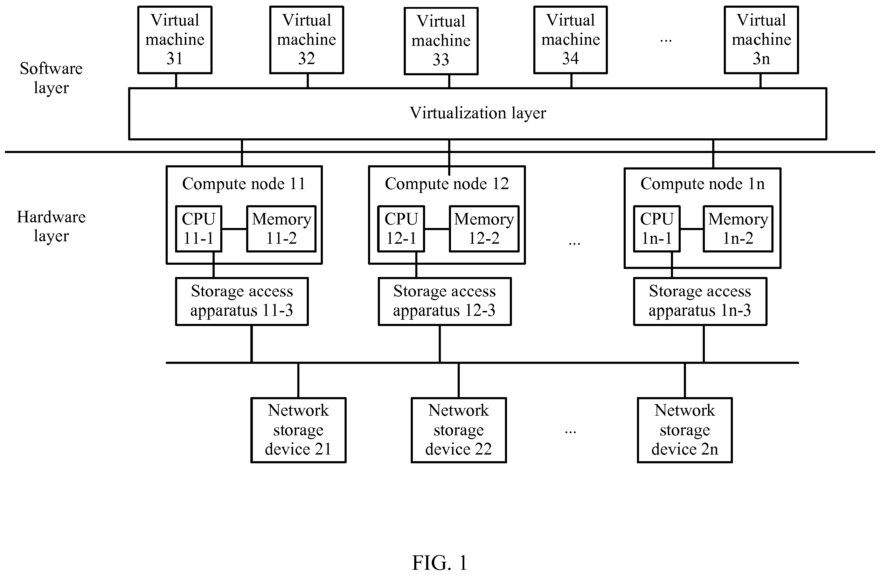

Referring to FIG. 1, FIG. 1 is a schematic diagram of a computer system configured to perform a storage access method in this application. FIG. 1 shows a hardware layer and a software layer of the computer system. The hardware layer of the computer system includes n compute nodes (in actual operation, n may be any positive integer greater than or equal to 1), n storage access apparatuses, and m network storage devices (in actual operation, m may be any positive integer greater than or equal to 1). Each compute node may be a blade server, a rack server, or another type of server, and is configured to provide computing resources. Each network storage device may be a SAN storage device, includes a storage array, an HDD hard disk, an SDD hard disk, or the like, and is configured to provide storage resources. The software layer of the computer system includes a virtualization layer (which may be distributed in operating systems OSs of the compute nodes, or may be independently set in an operating system of one of the compute nodes) configured to perform virtualization, and a plurality of virtual machines (Virtual Machine, VM).

The following describes a composition of a compute node by using a compute node 11 in FIG. 1 as an example. The compute node 11 includes a CPU 11-1 and a memory 11-2, and may further include some other hardware components, such as a network interface card (which is not shown in the figure). The CPU 11-1 may be one or more Intel processor chips, and the memory 11-2 provides a storage capacity for the CPU 11-1, temporarily stores a program and data that are executed by the CPU 11-1, and may be a random access memory (RAM), a read-only memory (ROM), a cache (CACHE), or the like.

A storage access apparatus 11-3 is a hardware device newly provided in this application and plays a key role in implementing the storage access method in this application. The storage access apparatus 11-3 includes a hardware-form processing unit, a PCIe (Peripheral Component Interconnect Express, PCIe) bus interface, and a network interface, one end of the storage access apparatus 11-3 is connected to the CPU 11-1 by using the PCIe (the storage access apparatus 11-3 may be considered as one PCIe endpoint device connected to the CPU 11-1 of the compute node), and another end of the storage access apparatus 11-3 is connected to the network storage devices (such as the network storage devices 21, 22, ..., and 2n) by using the network interface (ETH, ROCE, IB, or the like). A hardware-form processing unit is included inside the storage access apparatus 11-3, and the processing chip inside the storage access apparatus 11-3 may be implemented by using a system on chip (SOC), an application specific integrated circuit ASIC (Application Specific Integrated Circuit), or the like, or may be implemented by using a CPU. Firmware, an OS guide medium, and another hardware device such as a power source or a clock may be further included inside the storage access apparatus 11-3. The storage access apparatus 11-3 supports a storage-based single-root I/O virtualization (Single-root I/0 virtualization, SR-IOV) function, and the processing chip inside the storage access apparatus 11-3 provides a PCIe endpoint device interface that supports SR-IOV. The storage access apparatus 11-3 that supports an SR-IOV technology includes a physical function (Physical Function, PF) and a virtual function (Virtual Function, VF). The PF is a PCIe function that supports an SR-IOV extension function and is used to configure and manage an SR-IOV function characteristic, and the PF is an all-purpose PCIe function and may be discovered, managed, and processed like any other PCIe device. The PF owns all resources configured, and may be used to configure or control the storage access apparatus 11-3. The VF is a function associated with a physical function, and the VF is a lightweight PCIe function and may share one or more physical resources with the physical function and another VF that is associated with the same physical function as the VF. Each SR-IOV device may have at least one PF, and for each PF, one or more VFs associated with the PF may be configured. The PF may create a VF by using a register, and the VF is presented in PCIe configuration space. Each VF has its own PCIe configuration space. The VF may be externally displayed as a physically existing PCIe device, and one or more virtual functions may be allocated to a virtual machine by simulating configuration space. The storage access apparatus 11-3 supports SR-IOV and is configured to: configure at least one virtual function VF by using a physical function PF of the SR-IOV function, and configure a VM-VF association relationship, so that a direct access path is established between a VM and a VF that are associated. One VM corresponds to one VF.

The storage access apparatus 11-3 further supports a distributed storage resource scheduling function and is configured to: obtain, by using the network interface, data block resources provided by the at least one network storage device that is connected to the storage access apparatus, form a plurality of virtual volumes by using the obtained data block resources, and configure a VF-virtual volume association relationship, where one VF corresponds to at least one virtual volume. In brief, storage resources in the network storage devices are encapsulated into virtual volumes, and the virtual volumes are directly accessed by the VM by using the VF.

The virtual volume in this application may also be referred to as a virtual disk. Compared with a physical disk, the virtual disk is mainly a storage resource provided for use by a virtual machine and is usually obtained by integrating physical storage resources.

The storage access apparatus 11-3 provided in this application can directly establish a direct access path between a storage resource and a VM. Therefore, the storage access method supported by the storage access apparatus 11-3 does not require front-end and back-end software stacks that are used by a VM to access a storage resource in an existing cloud computing virtualization technology, so that a software stack path and a latency are shortened and performance is enhanced. In addition, the method does not require a large quantity of host (a CPU in a compute node) resources, so that host resource utilization is improved.

Devices 21 to 2n are network storage devices, and the storage access apparatus 11-3 is connected to the devices 21 to 2n by using the network interface. The network storage devices 21 to 2n may form a distributed storage resource pool, and a capacity of the storage resource pool can be randomly expanded. Each network storage device includes a storage controller and a storage medium, to implement hard disk management and bottom-layer data management, and present a data block and a data block call interface upwards. Each network storage device may be remotely deployed rather than deployed on a local compute node. The network storage devices 21 to 2n support distributed storage manners including a multi-copy manner, an EC manner, or the like, and can ensure liability of storage resources.

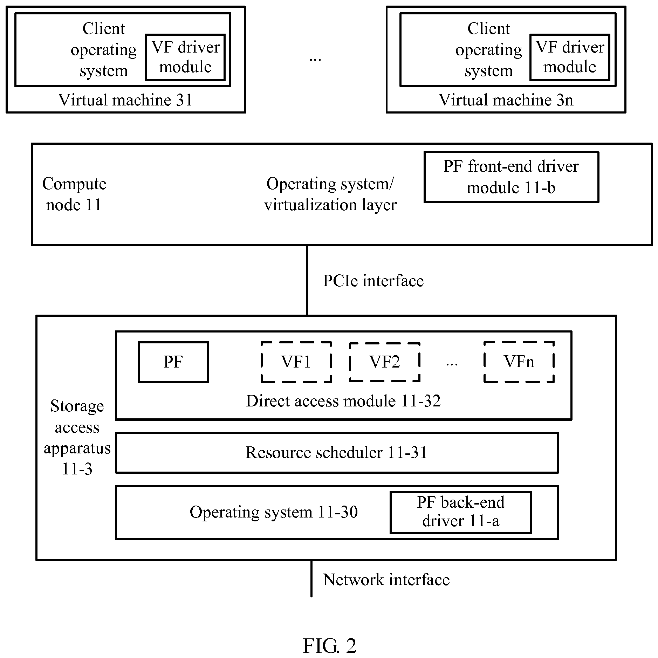

FIG. 2 is a schematic diagram of a software module composition of a computer system according to this application. In FIG. 2, only one storage access apparatus is shown as an example. The storage access apparatus 11-3 includes an operating system 11-30, a resource scheduler 11-31, and a direct access module 11-32. A PF back-end driver 11-a is loaded in the operating system 11-30, and the direct access module 11-32 includes a PF and a plurality of VFs. A PF front-end driver 11-b is configured in an operating system of a compute node 11. A VF driver module is loaded in a client operating system of a virtual machine 31.

The direct access module 11-32 of the storage access apparatus 11-3 supports SR-IOV and is configured to: configure at least one virtual function VF by using a physical function PF of the SR-IOV function, and configure a VM-VF association relationship, so that a direct access path is established between a VM and a VF that are associated.

Specifically, after being started, the storage access apparatus 11-3 loads the PF back-end driver 11-a to initialize the SR-IOV function; and the compute node 11 loads the PF front-end driver 11-b, and uses the PF front-end driver 11-b to obtain resource information of the storage access apparatus, configure a queue or interrupt resource for the storage access apparatus, and communicate with the storage access apparatus 11-3.

The resource scheduler 11-31 of the storage access apparatus 11-3 further supports a distributed storage resource scheduling function and is configured to: obtain, by using a network interface, data block resources provided by at least one network storage device that is connected to the storage access apparatus 11-3, form a plurality of virtual volumes by using the obtained data block resources, configure a virtual volume corresponding to a VF, and record an association relationship between the VF and the corresponding virtual volume.

Specifically, the resource scheduler 11-31 encapsulates the data block resources into the virtual volumes by accessing and calling data blocks of the network storage device and metadata of the data blocks, and configures a VF and a virtual volume to form a mapping relationship between the VF and the virtual volume. In addition, the resource scheduler 11-31 is further responsible for managing metadata of the virtual volumes, and is capable of finding specific physical addresses of data blocks of the network storage device based on a determined virtual volume.

A management agent unit (not shown in FIG. 2) may further be deployed on the storage access apparatus 11-3. The management agent unit provides a management interface and is connected to a management layer of the computer system (the management layer of the computer system may be a cloud management component, a storage management component, or another component that is configured to manage the computer system). The management layer of the computer system may determine, based on a command of an upper-layer application or based on a pre-configured management policy, to perform virtual machine resource allocation. When determining that virtual machine resource allocation needs to be performed, the management layer of the computer system may initiate, by using the management interface, an allocation request for allocating a storage resource to a VM. Specifically, the allocation request for allocating a storage resource to a VM may be a request for creating a volume or attaching a volume. A random virtual machine is used as an example, and in this application, a first virtual machine is used to represent the random virtual machine. The storage access apparatus 11-3 receives, by using the management interface, an allocation request for allocating a storage resource to the first VM, determines a first VF associated with the first VM, allocates at least one of the plurality of virtual volumes to the first VM, creates an association relationship between the allocated at least one virtual volume and the first VF, and returns an allocation response. The allocation response includes information about the at least one virtual volume that is allocated to the first VM.

After the direct access module 11-32 and the resource scheduler 11-31 of the storage access apparatus implement VM-VF association and VF-virtual volume association respectively, direct access between the VM and the virtual volume is implemented in effect. After the first VM sends an I/O request, the first VF of the storage access apparatus 11-3 receives the I/O request of the first VM by using a direct access path, and places the I/O request into an I/O queue of the first VF. The resource scheduler of the storage access apparatus 11-3 then determines, based on the virtual volume associated with the first VF, a data block that is in the network storage device and that corresponds to the I/O request, and executes a read or write operation on the data block that is in the network storage device and that corresponds to the I/O request.

The storage access method in this application does not require passing a front-end interface and a back-end interface that are at a virtualization medium layer, so that a VM access path, a software stack path, and an access latency are shortened, and storage access performance is enhanced. In addition, the method does not require a large quantity of host (a CPU in a compute node) resources, so that host resource utilization is improved.

A VF driver (VF driver) is deployed in each VM. The VF driver may be a SCSI driver or an NVMe driver and is deployed inside the VM. After the VM sends an I/O request, the I/O request is directly sent, by using the VF driver, to a VF associated with the VM, and after the storage access apparatus completes an operation of the I/O request, an operation result of the I/O request is returned, also by using the VF driver, to the VM that sends the I/O request.

The following specifically describes, with reference to FIG. 2, procedures of operations executed by the storage access apparatus. 1. A procedure of initialization configuration of the storage access apparatus and the compute node to implement communication is as follows: After the storage access apparatus 11-3 is started, the storage access apparatus 11-3 loads the PF back-end driver 11-a, and the storage access apparatus 11-3 executes initialization. The initialization process may include PF register initialization and VF register initialization, configuration of in-band/out-of-band address translation unit mapping, doorbell (doorbell) address configuration, direct memory access (Direct Memory Access, DMA) initialization, and base address register (Base Address Register, BAR) initialization. An objective of the initialization is to ensure that the storage access apparatus 11-3 can be enumerated and recognized by the compute node 11 as a PCIe endpoint device of the compute node 11, so as to implement interrupt transmission and memory access with hardware of the compute node 11. The compute node 11 loads the PF front-end driver 11-b, obtains the resource information on the storage access apparatus 11-3, and configures, for example, interrupt, queue, and base address register resources for the PF or the VFs in the storage access apparatus 11-3, to implement communication with the storage access apparatus.

In this application, the PF in the storage access apparatus 11-3 may be used to implement functions such as enabling SR-IOV, querying or allocating a storage medium that is in a storage device, and maintaining a resource allocation table. Specifically, the compute node 11 may load the PF front-end driver 11-b, enable the SR-IOV function, create a management queue, and deliver, by using the management queue of the PF front-end driver, a resource query command to the PF. After receiving the query command, the PF may return statuses of the storage medium, the interrupt resource, and the queue resource included in the storage device to the compute node 11. After receiving the statuses, of the storage medium, the interrupt resource, and the queue resource, returned by the PF, the compute node 11 may send an allocation command to the PF. The PF divides an integral storage resource into a plurality of storage sub-resources based on the allocation command, so as to allocate the storage sub-resources, the queue resource, and the interrupt resource to the PF or the VFs.

2. A procedure of configuring the VM-VF association relationship is as follows: A VM and a VF may be associated when the VM is being newly created or may be associated after the VM is created. A management module or an upper-layer application of the VM sends a VM association command to the PF back-end driver 11-a of the storage access apparatus 11-3 by using the PF front-end driver 11-b on the compute node 11. The direct access module 11-32 of the storage access apparatus 11-3 selects an associated VF, and associates the VF and the VM, that is, creating a mapping relationship between the VF and the VM, records an association relationship between the designated VM and the corresponding VF, and returns an association success message to the PF front-end driver 11-b. The PF front-end driver 11-b then returns the association success message to the management module or the upper-layer application module of the VM.

3. A procedure of integrating data blocks in the network storage device into virtual volumes is as follows: There is no specific timing relationship between this procedure and procedure 2. After the storage access apparatus 11-3 is started, these two procedures may be executed at any time. The resource scheduler 11-31 obtains, by using the network interface, storage resources from distributed network storage devices, that is, data block resources of the network storage devices, forms a plurality of virtual volumes by using the obtained data block resources, and records a correspondence between the virtual volumes and physical addresses of the data blocks (management of metadata of the virtual volumes).

4. A procedure of configuring the VF-virtual volume association relationship is as follows: Association implemented during volume attachment is used as an example (or association may be implemented during volume creation). A user or an upper-layer application initiates a command for attaching a volume to the first VM. The storage access apparatus receives the volume attachment command by using the management interface, and determines the first VF associated with the VM. The resource schedule 11-31 selects, for the first VM, at least one virtual volume from the plurality of virtual volumes formed in procedure 3, creates an association relationship between the selected at least one virtual volume and the first VF, and returns a volume attachment response. The volume attachment response includes information about the at least one virtual volume that is allocated to the first VM.

5. A procedure of processing an I/O request of a VM is as follows: The first VM initiates the I/O request. The first VF is further used to receive the I/O request of the first VM by using the direct access path, and place the I/O request into the I/O queue of the first VF. The resource scheduler 11-31 determines, based on the virtual volume associated with the first VF, the data block that is in the network storage device and that corresponds to the I/O request, and executes the read or write operation on the data block that is in the network storage device and that corresponds to the I/O request. After completing the operation of the I/O request, the resource scheduler 11-31 returns, by using the VF driver, the operation result of the I/O request to the first VM that sends the I/O request.

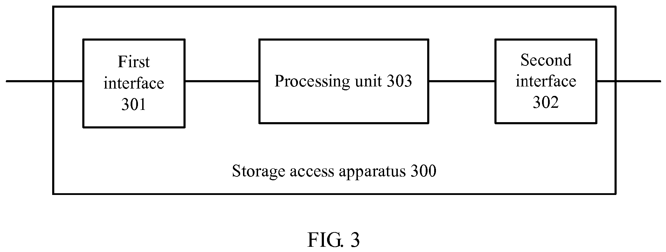

As shown in FIG. 3, an embodiment of the present application further provides a storage access apparatus 300. The storage access apparatus 300 includes a first interface 301, a second interface 302, and a processing unit 303. Specifically, the first interface 301 is a PCIe interface and is configured to connect a CPU of a compute node, the second interface is a network interface and is configured to connect a network storage device, and the processing unit 303 may be implemented by a hardware-form processing circuit, such as a system on chip , an application specific integrated circuit (Application Specific Integrated Circuit, ASIC), or a field programmable gate array (Field Programmable Gate Array, FPGA), or the processing unit 303 may be implemented in a form of a combination of a CPU and a memory (including corresponding code).

The storage access apparatus shown in FIG. 3 is configured to implement the functions of the storage access apparatus 11-3 described in FIG. 1 and FIG. 2. Details are not repeatedly described herein.

A person of ordinary skill in the art may be aware that the units and algorithm steps in the examples described with reference to the embodiments disclosed in this specification can be implemented by electronic hardware, computer software, or a combination thereof. To clearly describe the interchangeability between hardware and software, the foregoing has generally described compositions and steps in each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be indirect couplings or communication connections through some interfaces, apparatuses, or units, and may be electrical, mechanical or other forms of connections.

The units described as separate parts may or may not be physically separate. Parts displayed as units may or may not be physical units, and may be located in one position or distributed on a plurality of network units. Some or all of the units may be selected depending on actual requirements to achieve the objectives of the solutions of the embodiments of the present application.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present application, but are not intended to limit the protection scope of the present application. Any modification or replacement readily figured out by a person skilled in the art within the technical scope disclosed in the present application shall fall within the protection scope of the present application. Therefore, the protection scope of the present application shall be subject to the protection scope of the claims.

## Claims

1. A computer system, wherein the computer system comprises n compute nodes (11, 12 ... 1n), n storage access apparatuses (11-3, 12-3 ... 1n-3), and m network storage devices (21, 22 ... 2n), wherein at least one virtual machine, VM (31, 32 ... 3n), runs on each compute node, the m network storage devices provide distributed storage resources for the at least one virtual machine, and n and m are integers greater than or equal to 1;
each storage access apparatus comprises a processing unit, a Peripheral Component Interconnect Express, PCIe, bus interface, and a network interface, the storage access apparatus is connected to a processor of the at least one compute node by using the PCIe interface, and the storage access apparatus is connected to the at least one network storage device by using the network interface;
the storage access apparatus supports single-root I/O virtualization, SR-IOV, function and is configured to: configure at least one virtual function, VF (VF1, VF2 ... VFn), by using a physical function, PF, of the SR-IOV function, and configure a VM-VF association relationship, so that a direct access path is established between a VM and a VF that are associated, wherein one VM is associated with one VF; and
the storage access apparatus supports a distributed storage resource scheduling function and is configured to: obtain, by using the network interface, data block resources provided by the at least one network storage device that is connected to the storage access apparatus, form a plurality of virtual volumes by using the obtained data block resources, and configure a VF-virtual volume association relationship, wherein one VF is associated with at least one virtual volume;
wherein the storage access apparatus is specifically configured to: receive an allocation request for allocating a storage resource to a first VM, determine the first VF associated with the first VM, allocate at least one of the plurality of virtual volumes to the first VM, create an association relationship between the allocated at least one virtual volume and the first VF, and return an allocation response, wherein the allocation response comprises information about the at least one virtual volume that is allocated to the first VM.

2. The computer system according to claim 1, wherein a PF back-end driver is deployed in the storage access apparatus, and a PF front-end driver is deployed in the compute node connected to the storage access apparatus;
after being started, the storage access apparatus loads the PF back-end driver to perform initialization configuration; and
the compute node connected to the storage access apparatus loads the PF front-end driver, obtains resource information of the storage access apparatus by using the PF front-end driver, and delivers a configuration command to the storage access apparatus based on the resource information of the storage access apparatus, so that the storage access apparatus performs resource configuration, to allocate corresponding hardware resources to the PF and each VF.

3. The computer system according to claim 2, wherein after receiving a first VM association command sent by an upper-layer application, the compute node connected to the storage access apparatus forwards the first VM association command to the PF back-end driver by using the PF front-end driver; and
the storage access apparatus is specifically configured to: after receiving the first VM association command by using the PF back-end driver module, configure a corresponding first VF for the first VM designated in the first VM association command, and record an association relationship between the first VM and the first VF.

4. The computer system according to one of the claims 1 to 3, wherein the allocation request for allocating a storage resource to the first VM is a request for creating a virtual volume for the first VM or a request for attaching a virtual volume to the first VM.

5. The computer system according to one of the claims 1 to 4, wherein the first VF of the storage access apparatus is further configured to: receive an I/O request of the first VM by using the direct access path, place the I/O request into an I/O queue of the first VF, determine, based on the virtual volume associated with the first VF, a data block that is in the network storage device and that corresponds to the I/O request, and execute a read or write operation on the data block that is in the network storage device and that corresponds to the I/O request.

6. A storage access apparatus (11-3, 12-3 ... 1n-3), wherein the storage access apparatus comprises a processing unit, a Peripheral Component Interconnect Express, PCIe, bus interface, and a network interface, the storage access apparatus is connected to a processor of a compute node by using the PCIe interface, and the storage access apparatus is connected to at least one network storage device (21, 22 ... 2n), by using the network interface;
at least one virtual machine, VM (31, 32 ... 3n), runs on the compute node (11, 12 ... 1n), and the at least one network storage device provides distributed storage resources for the at least one virtual machine;
the storage access apparatus comprises a direct access module, wherein the direct access module supports single-root I/O virtualization, SR-IOV, function and is configured to: perform virtualization to obtain at least one virtual function, VF (VF1, VF2 ... VFn), by using a physical function, PF, of the SR-IOV function, and configure a VM-VF association relationship, so that a direct access path is established between a VM and a VF that are associated, wherein one VM is associated with one VF; and
the storage access apparatus further comprises a resource scheduler, wherein the resource scheduler supports a distributed storage resource scheduling function and is configured to: obtain, by using the network interface, data block resources provided by the at least one network storage device that is connected to the storage access apparatus, form a plurality of virtual volumes by using the obtained data block resources, and configure a VF-virtual volume association relationship, wherein one VF is associated with at least one virtual volume;
wherein the resource scheduler is specifically configured to: receive an allocation request for allocating a storage resource to a first VM, allocate at least one of the plurality of virtual volumes to the first VM, create an association relationship between the allocated at least one virtual volume and a first VF based on the first VF, associated with the first VM, determined by the direct access module, and return an allocation response, wherein the allocation response comprises information about the at least one virtual volume that is allocated to the first VM.

7. The storage access apparatus according to claim 6, wherein the allocation request for allocating a storage resource to the first VM is a request for creating a virtual volume for the first VM or a request for attaching a virtual volume to the first VM.

8. The storage access apparatus according to claim 6 or 7, wherein the first VF of the direct access module is further configured to: receive an I/O request of the first VM by using the direct access path, and place the I/O request into an I/O queue of the first VF; and the resource scheduler determines, based on the virtual volume associated with the first VF, a data block that is in the network storage device and that corresponds to the I/O request, and executes a read or write operation on the data block that is in the network storage device and that corresponds to the I/O request.

9. A method of storage accessing, the method is applied to a computer system, the computer system comprises n compute nodes (11, 12 ... 1n), n storage access apparatuses (11-3, 12-3 ... 1n-3), and m network storage devices (21, 22 ... 2n), wherein at least one virtual machine, VM (31, 32 ... 3n), runs on each compute node, the m network storage devices provide distributed storage resources for the at least one virtual machine, and n and m are integers greater than or equal to 1; wherein each storage access apparatus comprises a processing unit, a Peripheral Component Interconnect Express, PCIe, bus interface, and a network interface, the storage access apparatus is connected to a processor of the at least one compute node by using the PCIe interface, and the storage access apparatus is connected to the at least one network storage device by using the network interface;
wherein the storage access apparatus supports single-root I/O virtualization, SR-IOV, the method comprises:
configuring, by the storage access apparatus, at least one virtual function, VF (VF1, VF2 ... VFn), by using a physical function, PF, of the SR-IOV function, and configuring a VM-VF association relationship, so that a direct access path is established between a VM and a VF that are associated, wherein one VM is associated with one VF; and
wherein the storage access apparatus supports a distributed storage resource scheduling function, and the method further comprises:
obtaining, by the storage access apparatus by using the network interface, data block resources provided by the at least one network storage device that is connected to the storage access apparatus;
forming a plurality of virtual volumes by using the obtained data block resources; and
configuring a VF-virtual volume association relationship, wherein one VF is associated with at least one virtual volume;
the method further comprises:
receiving, by the storage access apparatus, an allocation request for allocating a storage resource to a first VM;
determining, by the storage access apparatus, the first VF associated with the first VM, allocate at least one of the plurality of virtual volumes to the first VM;
creating, by the storage access apparatus, an association relationship between the allocated at least one virtual volume and the first VF; and
returning, by the storage access apparatus, an allocation response, wherein the allocation response comprises information about the at least one virtual volume that is allocated to the first VM

10. The method of storage accessing according to claim 9, the method further comprises:
receiving, by the storage access apparatus, input/output, I/O, request which is send by the first VM;
placing, by the storage access apparatus, the I/O request into the I/O queue of the first VF;
determining, by the storage access apparatus based on the virtual volume associated with the first VF, the data block that is in the network storage device and that corresponds to the I/O request;
executing, by the storage access apparatus, the read or write operation on the at least one data block; and
sending, by the storage access apparatus, result of the I/O request to the first VM

11. The method of storage accessing according to claim 10, wherein a PF back-end driver is deployed in the storage access apparatus, and a PF front-end driver is deployed in the compute node connected to the storage access apparatus;
loading, by the storage access apparatus after being started, the PF back-end driver to perform initialization configuration;
receiving, by the storage access apparatus, a configuration command which is send by the compute node;
performing, by the storage access apparatus, resource configuration, to allocate corresponding hardware resources to a physical function, PF and each VF.

## Patentansprüche

1. Computersystem, wobei das Computersystem n Computerknoten (11, 12 ... 1n), n Speicherzugangseinrichtungen (11-3, 12-3 ... 1n-3) und m Netzwerkspeichervorrichtungen (21, 22 ... 2n) umfasst, wobei mindestens eine virtuelle Maschine, VM (31, 32 ... 3n), auf jedem Computerknoten läuft, die m Netzwerkspeichervorrichtungen verteilte Speicherressourcen für die mindestens eine virtuelle Maschine bereitstellen und n und m ganze Zahlen sind, die größer als oder gleich 1 sind;
wobei jede Speicherzugangseinrichtung eine Verarbeitungseinheit, eine Peripheral-Component-Interconnect-Express(PCIe)-Busschnittstelle und eine Netzwerkschnittstelle umfasst, die Speicherzugangseinrichtung unter Verwendung der PCIe-Schnittstelle mit einem Prozessor des mindestens einen Computerknotens verbunden ist und die Speicherzugangseinrichtung unter Verwendung der Netzwerkschnittstelle mit der mindestens einen Netzwerkspeichervorrichtung verbunden ist; wobei die Speicherzugangseinrichtung eine Single-Root-I/O-Virtualization(SR-IOV)-Funktion unterstützt und zu Folgendem konfiguriert ist: Konfigurieren mindestens einer virtuellen Funktion, VF (VF1, VF2 ... VFn), unter Verwendung einer physischen Funktion, PF, der SR-IOV-Funktion und Konfigurieren einer VM-VF-Zugehörigkeitsbeziehung, sodass ein direkter Zugangspfad zwischen einer VM und einer VF, die zugehörig sind, besteht, wobei eine VM einer VF zugehörig ist; und
wobei die Speicherzugangseinrichtung eine Planungsfunktion der verteilten Speicherressourcen unterstützt und zu Folgendem konfiguriert ist: Erlangen von Datenblockressourcen, die durch mindestens eine Netzwerkspeichervorrichtung, die mit der Speicherzugangseinrichtung verbunden ist, bereitgestellt sind, unter Verwendung der Netzwerkschnittstelle, Ausbilden einer Vielzahl von virtuellen Volumina unter Verwendung der erlangten Datenblockressourcen und Konfigurieren einer Zugehörigkeitsbeziehung zwischen VF und virtuellen Volumina, wobei eine VF mindestens einem virtuellen Volumen zugehörig ist; wobei die Speicherzugangseinrichtung spezifisch zu Folgendem konfiguriert ist: Empfangen einer Zuordnungsanforderung zur Zuordnung einer Speicherressource einer ersten VM, Bestimmen der ersten VF, die der ersten VM zugehörig ist, Zuordnen mindestens eines der Vielzahl von virtuellen Volumina der ersten VM, Herstellen einer Zugehörigkeitsbeziehung zwischen dem zugeordneten mindestens einen virtuellen Volumen und der ersten VF und Zurücksenden einer Zuordnungsantwort, wobei die Zuordnungsantwort Informationen zu dem mindestens einen virtuellen Volumen, das der ersten VM zugeordnet ist, umfasst.

2. Computersystem nach Anspruch 1, wobei ein PF-Backend-Treiber in die Speicherzugangseinrichtung eingesetzt ist und ein PF-Frontend-Treiber in den Computerknoten, der mit der Speicherzugangseinrichtung verbunden ist, eingesetzt ist; wobei die Speicherzugangseinrichtung den PF-Backend-Treiber nach ihrem Starten lädt, um eine Initialisierungskonfiguration durchzuführen; und
wobei der Computerknoten, der mit der Speicherzugangseinrichtung verbunden ist, den PF-Frontend-Treiber lädt, Ressourceninformationen der Speicherzugangseinrichtung unter Verwendung des PF-Frontend-Treibers erlangt und einen Konfigurationsbefehl an die Speicherzugangseinrichtung basierend auf den Ressourceninformationen der Speicherzugangseinrichtung liefert, sodass die Speicherzugangseinrichtung eine Ressourcenkonfiguration durchführt, um der PF und jeder VF entsprechende Hardwareressourcen zuzuweisen.

3. Computersystem nach Anspruch 2, wobei der Computerknoten, der mit der Speicherzugangseinrichtung verbunden ist, nach dem Empfangen eines ersten VM-Zugehörigkeitsbefehls, der durch eine Upper Layer-Anwendung gesendet wird, den ersten VM-Zugehörigkeitsbefehl unter Verwendung des PF-Frontend-Treibers an den PF-Backend-Treiber weiterleitet; und
wobei die Speicherzugangseinrichtung spezifisch zu Folgendem konfiguriert ist: Konfigurieren einer entsprechenden ersten VF für die erste VM, die in dem ersten VM-Zugehörigkeitsbefehl besteht, nach dem Empfangen des ersten VM-Zugehörigkeitsbefehls unter Verwendung des PF-Backend-Treibermoduls und Aufzeichnen einer Zugehörigkeitsbeziehung zwischen der ersten VM und der ersten VF.

4. Computersystem nach einem der Ansprüche 1 bis 3, wobei die Zuordnungsanforderung zur Zuordnung einer Speicherressource der ersten VM eine Anforderung zur Herstellung eines virtuellen Volumens für die erste VM oder eine Anforderung zur Befestigung eines virtuellen Volumens an die erste VM ist.

5. Computersystem nach einem der Ansprüche 1 bis 4, wobei die erste VF der Speicherzugangseinrichtung ferner zu Folgendem konfiguriert ist: Empfangen einer I/O-Anforderung der ersten VM unter Verwendung des direkten Zugangspfads, Platzieren der I/O-Anforderung in einer I/O-Warteschlange der ersten VF, Bestimmen eines Datenblocks, der in der Netzwerkspeichervorrichtung vorliegt und der I/O-Anforderung entspricht, basierend auf dem virtuellen Volumen, das der ersten VF zugehörig ist, und Ausführen eines Lese- oder Schreibvorgangs an dem Datenblock, der in der Netzwerkspeichervorrichtung vorliegt und der I/O-Anforderung entspricht.

6. Speicherzugangseinrichtung (11-3, 12-3 ... 1n-3), wobei die Speicherzugangseinrichtung eine Verarbeitungseinheit, eine Peripheral-Component-Interconnect-Express(PCIe)-Busschnittstelle und eine Netzwerkschnittstelle umfasst, wobei die Speicherzugangseinrichtung unter Verwendung der PCIe-Schnittstelle mit einem Prozessor eines Computerknotens verbunden ist und wobei die Speicherzugangseinrichtung unter Verwendung der Netzwerkschnittstelle mit mindestens einer Netzwerkspeichervorrichtung (21, 22 ... 2n) verbunden ist;
wobei mindestens eine virtuelle Maschine, VM (31, 32 ... 3n), auf dem Computerknoten (11, 12 ... 1n) läuft und die mindestens eine Netzwerkspeichervorrichtung verteilte Speicherressourcen für die mindestens eine virtuelle Maschine bereitstellt;
wobei die Speicherzugangseinrichtung ein Direktzugangsmodul umfasst, wobei das Direktzugangsmodul eine Single-Root-I/O-Virtualization(SR-IOV)-Funktion unterstützt und zu Folgendem konfiguriert ist: Durchführen einer Virtualisierung, um mindestens eine virtuelle Funktion, VF (VF1, VF2 ... VFn), unter Verwendung einer physischen Funktion, PF, der SR-IOV-Funktion zu erlangen, und Konfigurieren einer VM-VF-Zugehörigkeitsbeziehung, sodass ein direkter Zugangspfad zwischen einer VM und einer VF, die zugehörig sind, besteht, wobei eine VM einer VF zugehörig ist; und
wobei die Speicherzugangseinrichtung ferner einen Ressourcenplaner umfasst, wobei der Ressourcenplaner eine Planungsfunktion der verteilten Speicherressourcen unterstützt und zu Folgendem konfiguriert ist: Erlangen von Datenblockressourcen, die durch die mindestens eine Netzwerkspeichervorrichtung, die mit der Speicherzugangseinrichtung verbunden ist, bereitgestellt sind, unter Verwendung der Netzwerkschnittstelle, Ausbilden einer Vielzahl von virtuellen Volumina unter Verwendung der erlangten Datenblockressourcen und Konfigurieren einer Zugehörigkeitsbeziehung zwischen VF und virtuellen Volumina, wobei eine VF mindestens einem virtuellen Volumen zugehörig ist;
wobei der Ressourcenplaner spezifisch zu Folgendem konfiguriert ist: Empfangen einer Zuordnungsanforderung zur Zuordnung einer Speicherressource einer ersten VM, Zuordnen mindestens eines der Vielzahl von virtuellen Volumina der ersten VM, Herstellen einer Zugehörigkeitsbeziehung zwischen dem zugeordneten mindestens einen virtuellen Volumen und einer ersten VF basierend auf der ersten VF, die der ersten VM zugehörig ist, die durch das Direktzugangsmodul bestimmt ist, und Zurücksenden einer Zuordnungsantwort, wobei die Zuordnungsantwort Informationen über das mindestens eine virtuelle Volumen, das der ersten VM zugeordnet ist, umfasst.

7. Speicherzugangseinrichtung nach Anspruch 6, wobei die Zuordnungsanforderung zur Zuordnung einer Speicherressource der ersten VM eine Anforderung zur Herstellung eines virtuellen Volumens für die erste VM oder eine Anforderung zur Befestigung eines virtuellen Volumens an der ersten VM ist.

8. Speicherzugangseinrichtung nach Anspruch 6 oder 7, wobei die erste VF des Direktzugangsmoduls ferner zu Folgendem konfiguriert ist: Empfangen einer I/O-Anforderung der ersten VM unter Verwendung des direkten Zugangspfads und Platzieren der I/O-Anforderung in einer I/O-Warteschlange der ersten VF; und wobei der Ressourcenplaner einen Datenblock, der in der Netzwerkspeichervorrichtung vorliegt und der I/O-Anforderung entspricht, basierend auf dem virtuellen Volumen, das der ersten VF zugehörig ist, bestimmt und einen Lese- oder Schreibvorgang an dem Datenblock, der in der Netzwerkspeichervorrichtung vorliegt und der I/O-Anforderung entspricht, ausführt.

9. Verfahren zum Speicherzugang, wobei das Verfahren auf ein Computersystem angewendet wird, wobei das Computersystem n Computerknoten (11, 12 ... 1n), n Speicherzugangseinrichtungen (11-3, 12-3 ... 1n-3) und m Netzwerkspeichervorrichtungen (21, 22 ... 2n) umfasst, wobei mindestens eine virtuelle Maschine, VM (31, 32 ... 3n), auf jedem Computerknoten läuft, wobei die m Netzwerkspeichervorrichtungen verteilte Speicherressourcen für die mindestens eine virtuelle Maschine bereitstellen und n und m ganze Zahlen sind, die größer als oder gleich 1 sind; wobei jede Speicherzugangseinrichtung eine Verarbeitungseinheit, eine Peripheral-Component-Interconnect-Express(PCIe)-Busschnittstelle und eine Netzwerkschnittstelle umfasst, wobei die Speicherzugangseinrichtung unter Verwendung der PCIe-Schnittstelle mit einem Prozessor des mindestens einen Computerknotens verbunden ist, und wobei die Speicherzugangseinrichtung unter Verwendung der Netzwerkschnittstelle mit der mindestens einen Netzwerkspeichervorrichtung verbunden ist; wobei die Speicherzugangseinrichtung eine Single-Root-I/O-Virtualisierung, SR-IOV, unterstützt, wobei das Verfahren Folgendes umfasst:
Konfigurieren mindestens einer virtuellen Funktion, VF (VF1, VF2 ... VFn), unter Verwendung einer physischen Funktion, PF, der SR-IOV-Funktion durch die Speicherzugangseinrichtung und Konfigurieren einer VM-VF-Zugehörigkeitsbeziehung, sodass ein direkter Zugangspfad zwischen einer VM und einer VF, die zugehörig sind, besteht, wobei eine VM einer VF zugehörig ist; und
wobei die Speicherzugangseinrichtung eine Planungsfunktion der verteilten Speicherressourcen unterstützt, und wobei das Verfahren ferner Folgendes umfasst:
Erlangen von Datenblockressourcen, die durch mindestens eine Netzwerkspeichervorrichtung, die mit der Speicherzugangseinrichtung verbunden ist, bereitgestellt sind, durch die Speicherzugangseinrichtung unter Verwendung der Netzwerkschnittstelle;
Ausbilden einer Vielzahl von virtuellen Volumina unter Verwendung der erlangten Datenblockressourcen; und
Konfigurieren einer Zugehörigkeitsbeziehung zwischen VF und virtuellen Volumina, wobei eine VF mindestens einem virtuellen Volumen zugehörig ist;
wobei das Verfahren ferner Folgendes umfasst:
Empfangen einer Zuordnungsanforderung zur Zuordnung einer Speicherressource einer ersten VM durch die Speicherzugangseinrichtung;
Bestimmen der ersten VF, die der ersten VM zugehörig ist, durch die Speicherzugangseinrichtung, Zuordnen mindestens eines der Vielzahl von virtuellen Volumina der ersten VM;
Herstellen einer Zugehörigkeitsbeziehung zwischen dem zugeordneten mindestens einen virtuellen Volumen und der ersten VF durch die Speicherzugangseinrichtung; und
Zurücksenden einer Zuordnungsantwort durch die Speicherzugangseinrichtung, wobei die Zuordnungsantwort Informationen über das mindestens eine virtuelle Volumen, das der ersten VM zugeordnet ist, umfasst.

10. Verfahren zum Speicherzugang nach Anspruch 9, wobei das Verfahren ferner Folgendes umfasst:
Empfangen einer Input/Output(I/O)-Anforderung, welche durch die erste VM gesendet wird, durch die Speicherzugangseinrichtung;
Platzieren der I/O-Anforderung in einer I/O-Warteschlange der ersten VF durch die Speicherzugangseinrichtung;
Bestimmen des Datenblocks, der in der Netzwerkspeichervorrichtung vorliegt und der I/O-Anforderung entspricht, durch die Speicherzugangseinrichtung basierend auf dem virtuellen Volumen, das der ersten VF zugehörig ist;
Ausführen des Lese- oder Schreibvorgangs an dem mindestens einen Datenblock durch die Speicherzugangseinrichtung; und
Senden des Ergebnisses der I/O-Anforderung durch die Speicherzugangseinrichtung an die erste VM.

11. Verfahren zum Speicherzugang nach Anspruch 10, wobei ein PF-Backend-Treiber in die Speicherzugangseinrichtung eingesetzt ist und ein PF-Frontend-Treiber in den Computerknoten, der mit der Speicherzugangseinrichtung verbunden ist, eingesetzt ist;
Laden des PF-Backend-Treibers durch die Speicherzugangseinrichtung nach ihrem Starten, um eine Initialisierungskonfiguration durchzuführen;
Empfangen eines Konfigurationsbefehls, welcher durch den Computerknoten gesendet wird, durch die Speicherzugangseinrichtung;
Durchführen einer Ressourcenkonfiguration durch die Speicherzugangseinrichtung, um entsprechende Hardwareressourcen einer physischen Funktion, PF, und jeder VF zuzuordnen.

## Revendications

1. Système informatique, le système informatique comprenant n nœuds de calcul (11, 12 ... 1n), n appareils d'accès à la mémoire (11-3, 12-3 ... 1n-3) et m dispositifs de stockage en réseau (21, 22 ... 2n), dans lequel au moins une machine virtuelle, VM (31, 32 ... 3n), s'exécute sur chaque nœud de calcul, les m dispositifs de stockage en réseau fournissent des ressources de stockage distribuées pour l'au moins une machine virtuelle, et n et m sont des nombres entiers supérieurs ou égaux à 1 ;
chaque appareil d'accès à la mémoire comprend une unité de traitement, une interface de bus d'interconnexion de composants périphériques express, PCIe, et une interface réseau, l'appareil d'accès à la mémoire est connecté à un processeur de l'au moins un nœud de calcul en utilisant l'interface PCIe, et l'appareil d'accès à la mémoire est connecté à l'au moins un dispositif de stockage en réseau en utilisant l'interface réseau ;
l'appareil d'accès à la mémoire prend en charge une fonction de virtualisation d'E/S à racine unique, SR-IOV, et est configuré pour : configurer au moins une fonction virtuelle, VF (VF1, VF2 ... VFn), en utilisant une fonction physique, PF, de la fonction SR-IOV, et configurer une relation d'association VM-VF, de sorte qu'un chemin d'accès direct est établi entre une VM et une VF qui sont associées, dans lequel une VM est associée à une VF ; et
l'appareil d'accès à la mémoire prend en charge une fonction de planification de ressources de stockage distribuées et est configuré pour : obtenir, en utilisant l'interface réseau, des ressources de blocs de données fournies par l'au moins un dispositif de stockage en réseau qui est connecté à l'appareil d'accès à la mémoire, former une pluralité de volumes virtuels en utilisant les ressources de blocs de données obtenues, et configurer une relation d'association VF-volume virtuel, dans lequel une VF est associée à au moins un volume virtuel ;
dans lequel l'appareil d'accès à la mémoire est spécifiquement configuré pour : recevoir une demande d'attribution pour attribuer une ressource de stockage à une première VM, déterminer la première VF associée à la première VM, attribuer au moins l'un parmi la pluralité de volumes virtuels à la première VM, créer une relation d'association entre l'au moins un volume virtuel attribué et la première VF, et renvoyer une réponse d'attribution, dans lequel la réponse d'attribution comprend des informations sur l'au moins un volume virtuel qui est attribué à la première VM.

2. Système informatique selon la revendication 1, dans lequel un pilote dorsal de PF est déployé dans l'appareil d'accès à la mémoire, et un pilote frontal de PF est déployé dans le nœud de calcul connecté à l'appareil d'accès à la mémoire ;
après avoir été démarré, l'appareil d'accès à la mémoire charge le pilote dorsal de PF pour exécuter une configuration d'initialisation ; et
le nœud de calcul connecté à l'appareil d'accès à la mémoire charge le pilote frontal de PF, obtient des informations de ressource de l'appareil d'accès à la mémoire en utilisant le pilote frontal de PF, et délivre une commande de configuration à l'appareil d'accès à la mémoire sur la base des informations de ressource de l'appareil d'accès à la mémoire, de sorte que l'appareil d'accès à la mémoire exécute une configuration de ressources, pour attribuer des ressources matérielles correspondantes à la PF et à chaque VF.

3. Système informatique selon la revendication 2, dans lequel après avoir reçu une première commande d'association de VM envoyée par une application de couche supérieure, le nœud de calcul connecté à l'appareil d'accès à la mémoire transmet la première commande d'association de VM au pilote dorsal de PF en utilisant le pilote frontal de PF ; et
l'appareil d'accès à la mémoire est spécifiquement configuré pour : après avoir reçu la première commande d'association de VM en utilisant le module de pilote dorsal de PF, configurer une première VF correspondante pour la première VM désignée dans la première commande d'association de VM, et enregistrer une relation d'association entre la première VM et la première VF.

4. Système informatique selon l'une des revendications 1 à 3, dans lequel la demande d'attribution pour attribuer une ressource de stockage à la première VM est une demande de création d'un volume virtuel pour la première VM ou une demande de rattachement d'un volume virtuel à la première VM.

5. Système informatique selon l'une des revendications 1 à 4, dans lequel la première VF de l'appareil d'accès à la mémoire est en outre configurée pour : recevoir une demande d'E/S de la première VM en utilisant le chemin d'accès direct, placer la demande d'E/S dans une file d'attente d'E/S de la première VF, déterminer, sur la base du volume virtuel associé à la première VF, un bloc de données qui se trouve dans le dispositif de stockage en réseau et qui correspond à la demande d'E/S, et exécuter une opération de lecture ou d'écriture sur le bloc de données qui se trouve dans le dispositif de stockage en réseau et qui correspond à la demande d'E/S.

6. Appareil d'accès à la mémoire (11-3, 12-3 ... 1n-3), dans lequel l'appareil d'accès à la mémoire comprend une unité de traitement, une interface de bus d'interconnexion de composants périphériques express, PCIe, et une interface réseau, l'appareil d'accès à la mémoire est connecté à un processeur d'un nœud de calcul en utilisant l'interface PCIe, et l'appareil d'accès à la mémoire est connecté à au moins un dispositif de stockage en réseau (21, 22 ... 2n), en utilisant l'interface réseau ;
au moins une machine virtuelle, VM (31, 32 ... 3n), s'exécute sur le nœud de calcul (11, 12 ... 1n), et l'au moins un dispositif de stockage en réseau fournit des ressources de stockage distribuées pour l'au moins une machine virtuelle ; l'appareil d'accès à la mémoire comprend un module d'accès direct, dans lequel le module d'accès direct prend en charge une fonction de virtualisation d'E/S à racine unique, SR-IOV, et est configuré pour : exécuter une virtualisation pour obtenir au moins une fonction virtuelle, VF (VF1, VF2 ... VFn), en utilisant une fonction physique, PF, de la fonction SR-IOV, et configurer une relation d'association VM-VF, de sorte qu'un chemin d'accès direct est établi entre une VM et une VF qui sont associées, dans lequel une VM est associée à une VF ; et
l'appareil d'accès à la mémoire comprend en outre un planificateur de ressources, dans lequel le planificateur de ressources prend en charge une fonction de planification de ressources de stockage distribuées et est configuré pour :
obtenir, en utilisant l'interface réseau, des ressources de blocs de données fournies par l'au moins un dispositif de stockage en réseau qui est connecté à l'appareil d'accès à la mémoire, former une pluralité de volumes virtuels en utilisant les ressources de blocs de données obtenues, et configurer une relation d'association VF-volume virtuel, dans lequel une VF est associée à au moins un volume virtuel ;
dans lequel le planificateur de ressources est spécifiquement configuré pour : recevoir une demande d'attribution pour attribuer une ressource de stockage à une première VM, attribuer au moins un parmi la pluralité de volumes virtuels à la première VM, créer une relation d'association entre l'au moins un volume virtuel attribué et une première VF sur la base de la première VF, associée à la première VM, déterminée par le module d'accès direct, et renvoyer une réponse d'attribution, dans lequel la réponse d'attribution comprend des informations sur l'au moins un volume virtuel qui est attribué à la première VM.

7. Appareil d'accès à la mémoire selon la revendication 6, dans lequel la demande d'attribution pour attribuer une ressource de stockage à la première VM est une demande de création d'un volume virtuel pour la première VM ou une demande de rattachement d'un volume virtuel à la première VM.

8. Appareil d'accès à la mémoire selon la revendication 6 ou 7, dans lequel la première VF du module d'accès direct est en outre configurée pour : recevoir une demande d'E/S de la première VM en utilisant le chemin d'accès direct, et placer la demande d'E/S dans une file d'attente d'E/S de la première VF ; et le planificateur de ressources détermine, sur la base du volume virtuel associé à la première VF, un bloc de données qui se trouve dans le dispositif de stockage en réseau et qui correspond à la demande d'E/S, et exécute une opération de lecture ou d'écriture sur le bloc de données qui se trouve dans le dispositif de stockage en réseau et qui correspond à la demande d'E/S.

9. Procédé d'accès à la mémoire, le procédé est appliqué à un système informatique, le système informatique comprend n nœuds de calcul (11, 12 ... 1n), n appareils d'accès à la mémoire (11-3, 12-3 ... 1n-3) et m dispositifs de stockage en réseau (21, 22 ... 2n), dans lequel au moins une machine virtuelle, VM (31, 32 ... 3n), s'exécute sur chaque nœud de calcul, les m dispositifs de stockage en réseau fournissent des ressources de stockage distribuées pour l'au moins une machine virtuelle, et n et m sont des nombres entiers supérieurs ou égaux à 1 ; dans lequel chaque appareil d'accès à la mémoire comprend une unité de traitement, une interface de bus d'interconnexion de composants périphériques express, PCIe, et une interface réseau, l'appareil d'accès à la mémoire est connecté à un processeur de l'au moins un nœud de calcul en utilisant l'interface PCIe, et l'appareil d'accès à la mémoire est connecté à l'au moins un dispositif de stockage en réseau en utilisant l'interface réseau ;
dans lequel l'appareil d'accès à la mémoire prend en charge la virtualisation d'E/S à racine unique, SR-IOV, le procédé comprend :
la configuration, par l'appareil d'accès à la mémoire, d'au moins une fonction virtuelle, VF(VF1, VF2 ... VFn), en utilisant une fonction physique, PF, de la fonction SR-IOV, et la configuration d'une relation d'association VM-VF, de sorte qu'un chemin d'accès direct est établi entre une VM et une VF qui sont associées, dans lequel une VM est associée à une VF ; et
dans lequel l'appareil d'accès à la mémoire prend en charge une fonction de planification de ressources de stockage distribuées, et le procédé comprend en outre :
l'obtention, par l'appareil d'accès à la mémoire en utilisant l'interface réseau, de ressources de blocs de données fournies par l'au moins un dispositif de stockage en réseau qui est connecté à l'appareil d'accès à la mémoire ;
la formation d'une pluralité de volumes virtuels en utilisant les ressources de blocs de données obtenues ; et
la configuration d'une relation d'association VF-volume virtuel, dans lequel une VF est associée à au moins un volume virtuel ; le procédé comprend en outre :
la réception, par l'appareil d'accès à la mémoire, d'une demande d'attribution pour attribuer une ressource de stockage à une première VM ;
la détermination, par l'appareil d'accès à la mémoire, de la première VF associée à la première VM, l'attribution d'au moins l'un parmi la pluralité de volumes virtuels à la première VM ;
la création, par l'appareil d'accès à la mémoire, d'une relation d'association entre l'au moins un volume virtuel attribué et la première VF ; et
le renvoi, par l'appareil d'accès à la mémoire, d'une réponse d'attribution, dans lequel la réponse d'attribution comprend des informations sur l'au moins un volume virtuel qui est attribué à la première VM.

10. Procédé d'accès à la mémoire selon la revendication 9, le procédé comprenant en outre :
la réception, par l'appareil d'accès à la mémoire, d'une demande d'entrée/sortie, E/S, qui est envoyée par la première VM ;
le placement, par l'appareil d'accès à la mémoire, de la demande d'E/S dans la file d'attente d'E/S de la première VF ;
la détermination, par l'appareil d'accès à la mémoire sur la base du volume virtuel associé à la première VF, du bloc de données qui se trouve dans le dispositif de stockage en réseau et qui correspond à la demande d'E/S ;
l'exécution, par l'appareil d'accès à la mémoire, de l'opération de lecture ou d'écriture sur l'au moins un bloc de données ; et
l'envoi, par l'appareil d'accès à la mémoire, d'un résultat de la demande d'E/S à la première VM.

11. Procédé d'accès à la mémoire selon la revendication 10, dans lequel un pilote dorsal de PF est déployé dans l'appareil d'accès à la mémoire, et un pilote frontal de PF est déployé dans le nœud de calcul connecté à l'appareil d'accès à la mémoire ;
le chargement, par l'appareil d'accès à la mémoire après avoir été démarré, du pilote dorsal de PF pour exécuter une configuration d'initialisation ;
la réception, par l'appareil d'accès à la mémoire, d'une commande de configuration qui est envoyée par le nœud de calcul ; l'exécution, par l'appareil d'accès à la mémoire, d'une configuration de ressources, pour attribuer des ressources matérielles correspondantes à une fonction physique, PF et à chaque VF.
